# EUROPÄISCHE PATENTSCHRIFT

(11) **EP 4 249 886 B1**
(45) Veröffentlichungstag und Bekanntmachung des Hinweises auf die Patenterteilung: **28.05.2025**
(21) Anmeldenummer: 23158939.1
(22) Anmeldetag: 28.02.2023
(51) Int. Cl.: G01M 17/02

(54) **REIFENPRÜFGERÄT**
TYRE TEST DEVICE
APPAREIL DE CONTRÔLE DE PNEUS

(30) Priorität: 23.03.2022 DE 102022106813
(43) Veröffentlichungstag der Anmeldung: 27.09.2023
(73) Patentinhaber: Italmatic srl, 20051 Cassina de' Pecchi (MI) (IT)
(72) Erfinder: KAYSER, Andre, 67160 Seebach (FR); LEITNER, Bernhard, 83115 Neubeuern (DE)
(74) Vertreter: Behr, Wolfgang

(56) Entgegenhaltungen:
- EP-A1- 3 521 796
- DE-A1- 4 002 856
- US-A1- 2016 239 027
- US-A1- 2018 372 603

## Beschreibung

Die vorliegende Erfindung betrifft ein Prüfgerät, beim welchem es sich um ein Reifenprüfgerät handelt, mit einer Prüfkammer, in welcher ein Reifen als zu prüfendes Messobjekt angeordnet werden kann, einer Druckbelastungseinheit zur Veränderung des Drucks in der Prüfkammer und mindestens einem Messkopf zum Vermessen eines in der Prüfkammer angeordneten Messobjekts bei unterschiedlichen, durch die Druckbelastungseinheit erzeugten Druckwerten.

Die vorliegende Erfindung betrifft dabei insbesondere Prüfgeräte, welche das Messobjekt interferometrisch vermessen, beispielsweise durch Shearographie. Hierbei werden Phasenbilder, welche bei unterschiedlichen Druckwerten und damit unterschiedlichen Belastungszuständen des Messobjektes aufgenommen werden, ausgewertet, um die Verformung des Messobjektes zwischen den beiden Zuständen zu ermitteln. Insbesondere können hierdurch Fehlstellen im Inneren des Messobjektes, welche lokal zu einem anderen Ausdehnungsverhalten des Messobjekts unter der Druckveränderung führen, erfasst werden.

In einem Reifenprüfgerät wird der Reifen in der Prüfkammer bei unterschiedlichen Druckwerten mittels des Messkopfes vermessen, um Fehlstellen des Reifens, insbesondere Fehlstellen im Inneren des Reifens, zu erfassen.

Übliche Reifenprüfgeräte arbeiten meist mit Unterdruck, das heißt die Druckbelastungseinheit senkt nach dem Einbringen des Messobjektes in die Prüfkammer den Druck innerhalb der Prüfkammer ab und hebt diesen sodann wieder auf den Umgebungsdruck an. Die Vermessung des Messobjektes kann dabei sowohl während der Phase der Erzeugung des Unterdruckes, das heißt bei ansteigendem Unterdruck, als auch während der Phase des Abbaus des Unterdrucks, das heißt bei abfallendem Unterdruck, als auch in beiden Phasen erfolgen.

Gemäß dem Stand der Technik wird der Unterdruck in der Prüfkammer über eine Pumpe erzeugt, welche über Rohrleitungen mit der Prüfkammer in Verbindung steht. Das Ablassen des Unterdrucks erfolgt entweder durch Öffnen einer Zuströmöffnung, durch welche Luft aufgrund des Druckunterschiedes aus der Umgebung in die Prüfkammer einströmt, oder aktiv durch Pumpen von Luft in die Prüfkammer.

Solche Reifenprüfgeräte sind aus den Druckschriften DE102013010402A1, EP2851670B1, DE102005049607A1, EP 3 521 796 A1, DE10102232C2, DE102006015123B4, EP1959227B1, DE 10 2006 061 003 B4 und DE 10 2013 102 296 B4 bekannt.

Druckschrift US 2018/372603 A1 zeigt ein Prüfgerät für Laminate. Druckschrifte US 2016/239027 A1 zeigt ein System zur Druckkompensation für U-Boote. DE 40 02 856 A1 zeigt ein Ventil.

Die Erfinder der vorliegenden Erfindung haben eine Reihe von Nachteilen im Einsatz einer Unterdruckpumpe zur Erzeugung des Unterdruckes erkannt. So führt die Unterdruckerzeugung mittels Unterdruckpumpe zu einer Luftverwirbelung in der Prüfkammer, die zu Bewegungen oder Schwingungen des Messobjektes führen kann, und damit zu schlechterer Bildqualität. Gegebenenfalls sind daher auch Beruhigungszeiten notwendig, welche aber zu einer höheren Prüfzeit führen. Weiterhin ist keine exakte Steuerung des Unterdruckprofils möglich, so dass sich potenziell eine schlechtere Bildqualität ergibt. Weiterhin führt der Einsatz einer Unterdruckpumpe zu einer vergleichsweise hohen Lautstärke und einem hohen Energieverbrauch. Trotz dieser Nachteile werden im Bereich der gattungsgemäßen Prüfgeräte seit Jahrzehnten Unterdruckpumpen eingesetzt. Eine Alternative war bisher nicht erkennbar. Aufgabe der vorliegenden Erfindung ist es, ein verbessertes Reifenprüfgerät zur Verfügung zu stellen.

Erfindungsgemäß wird diese Aufgabe durch ein Reifenprüfgerät gemäß Anspruch 1 gelöst. Bevorzugte Ausgestaltungen der vorliegenden Erfindung sind Gegenstand der Unteransprüche.

Die vorliegende Erfindung umfasst ein Prüfgerät, beim welchem es sich um ein Reifenprüfgerät handelt, mit einer Prüfkammer, einer Druckbelastungseinheit zur Veränderung des Drucks in der Prüfkammer und mindestens einem Messkopf zum Vermessen eines in der Prüfkammer angeordneten Messobjekts bei unterschiedlichen, durch die Druckbelastungseinheit erzeugten Druckwerten. Erfindungsgemäß ist dabei vorgesehen, dass die Druckbelastungseinheit zur Veränderung des Drucks in der Prüfkammer das Prüfkammervolumen unter Luftabschluss zur Umgebung verändert. Durch die erfindungsgemäße Ausgestaltung der Druckbelastungseinheit können zumindest einige der oben im Hinblick auf den Einsatz von Unterdruckpumpen genannten Probleme verbessert oder vermieden werden. Beispielsweise kann die Luftströmungsproblematik und deren negativer Einfluss auf die Bildqualität verbessert oder beseitigt werden, da deutlich weniger Luftbewegungen stattfinden. Je nach Ausgestaltung lässt sich auch das Druckprofil, insbesondere das Unterdruckprofil, genauer ansteuern. Weiterhin ist es möglich, die Zykluszeit zu verringern und mit einem besseren Wirkungsgrad und geringeren Lärmemissionen zu arbeiten.

Gemäß der vorliegenden Erfindung umfasst die Druckbelastungseinheit ein gegenüber dem sonstigen Prüfkammeraufbau bewegliches Wandelement der Prüfkammer, über dessen Bewegung das Prüfkammervolumen veränderbar ist.

Über die Position des Wandelementes entlang seines Hubweges kann daher ein gewünschter Druck in der Prüfkammer eingestellt werden. In einer möglichen Ausgestaltung der Erfindung ist daher das Prüfkammervolumen und damit der Druck in der Prüfkammer über die Position des beweglichen Wandelementes ansteuerbar.

Durch den erfindungsgemäßen Einsatz eines beweglichen Wandelementes ergeben sich insbesondere die oben bereits beschriebenen Vorteile der geringeren Luftströmungen innerhalb der Prüfkammer, der besseren Kontrolle der Druckänderung, des geringeren Energieverbrauchs sowie der geringeren Lärmentwicklung.

In einer möglichen Ausgestaltung der vorliegenden Erfindung steht das bewegliche Wandelement abgedichtet mit dem sonstigen Prüfkammeraufbau in Verbindung, wobei die Abdichtung über eine Gleitdichtung oder über eine flexible Dichtung erfolgen kann, um den Luftabschluss zur Umgebung bei der Bewegung des Wandelementes beizubehalten. In einer möglichen Ausgestaltung der vorliegenden Erfindung steht das bewegliche Wandelement über ein flexibles Dichtelement, insbesondere ein Faltenbalg, abgedichtet mit dem sonstigen Prüfkammeraufbau in Verbindung. Weiterhin könnten, ist ein geringerer Hubweg ausreichend, beispielsweise auch ein flexibles Dichtelement aus Moosgummi eingesetzt werden.

Das bewegliche Wandelement kann als starres Wandelement ausgestaltet sein, welches über eine Gleitdichtung oder eine flexible Dichtung mit dem sonstigen Prüfkammeraufbau in Verbindung steht.

In einer möglichen Ausgestaltung der vorliegenden Erfindung wird das bewegliche Wandelement durch eine flexible Membran gebildet, welche abgedichtet mit dem sonstigen Prüfkammeraufbau in Verbindung steht. Je nach benötigtem Hubweg kann beispielweise eine Flachmembran, eine Sickenmembran, eine Tellermembran und/oder eine Rollmembran zum Einsatz kommen. Die Membran kann beispielsweise aus einem gewebeverstärken Elastomer gefertigt sein.

In einer möglichen Ausgestaltung der vorliegenden Erfindung weist das bewegliche Wandelement bei Projektion in eine sich senkrecht zu seiner Bewegungsrichtung erstreckende Ebene eine Fläche von mindestens 5% des Quadrats der Kubikwurzel des Volumens der Prüfkammer auf. Das Quadrat der Kubikwurzel des Volumens der Prüfkammer entspricht dabei der Fläche einer Seitenwand einer gedachten Prüfkammer, welche die Form eines Kubus aufweist und das gleiche Volumen wie die tatsächliche Prüfkammer aufweist. Die Fläche des beweglichen Wandelementes trägt daher gemäß dieser Ausgestaltung mindestens 5% der Wandfläche einer solchen Seitenwand eines Kubus mit gleichem Volumen wie die Prüfkammer.

Bevorzugt beträgt die Fläche des beweglichen Wandelementes bei Projektion in eine sich senkrecht zu seiner Bewegungsrichtung erstreckende Ebene mindestens 10%, weiter bevorzugt mindestens 30% des Quadrats der Kubikwurzel des Volumens der Prüfkammer.

Durch eine entsprechende Größe des Wandelementes kann der benötigte Hubweg verringert und können eventuell auftretende Luftverwirbelungen reduziert werden.

Nach oben hin ist die Größe des Wandelementes nur durch die Größe der Wand der Prüfkammer begrenzt, in welcher das Wandelement angeordnet ist.

In einer möglichen Ausgestaltung der vorliegenden Erfindung weist das bewegliche Wandelementes bei Projektion eine in sich senkrecht zu seiner Bewegungsrichtung erstreckende Ebene eine Fläche von mindestens 0,05 qm, bevorzugt von mindestens 0,2 qm, weiter bevorzugt von mindestens 0,5 qm auf. Mit diesen Dimensionierungen werden für Reifenprüfgeräte bevorzugte Maße angegeben.

In einer möglichen Ausgestaltung der vorliegenden Erfindung weist das Prüfgerät einen Antrieb auf, über welchen das bewegliche Wandelement bewegbar ist. Insbesondere handelt es sich bei dem Antrieb um einen Servomotor, über welchen die Position des beweglichen Wandelementes entlang seines Hubwegs einstellbar ist.

Bevorzugt weist das Prüfgerät eine Steuerung auf, welche den Antrieb so ansteuert, dass das bewegliche Wandelement gemäß einer vorgegebenen Weg-Zeit-Kurve entlang seines Hubwegs bewegt und hierdurch ein definiertes Druck-Zeit-Profil in der Prüfkammer erzeugt.

Bevorzugt weist das Prüfgerät eine Steuerung auf, welche den Antrieb und den mindestens einen Messkopf so ansteuert, dass das Messobjekt in mindestens einem Messzyklus, in welchem der Druck in der Druckkammer durch eine Bewegung des beweglichen Wandelementes verändert wird, durch den mindestens ein Messkopf geprüft wird.

Insbesondere kann dabei eine automatsche Ansteuerung des Antriebs und/oder des Messkopfes vorgenommen werden, sodass das Messobjekt automatisch geprüft wird.

Ein Messzyklus umfasst bevorzugt mindestens eine erste Bewegung des beweglichen Wandelementes aus einer Ausgangsposition, in welcher im Inneren der Prüfkammer Umgebungsdruck herrscht, in eine Belastungsposition, in welcher durch die Bewegung des beweglichen Elementes der Druck im Inneren der Prüfkammer in eine erste Richtung verändert wurde, sowie mindestens eine zweite Bewegung, durch welche der Druck im Inneren der Prüfkammer in die entgegengesetzte Richtung zurück auf den Umgebungsdruck verändert wird.

Bevorzugt ist dabei in der Steuerung ein Bewegungsprofil hinterlegt, mit welchem das bewegliche Element gezielt entlang seines Hubweges bewegt wird. Hierdurch lässt sich ein entsprechendes Druckprofil im Inneren der Prüfkammer erzeugen.

Ein besonderer Vorteil der vorliegenden Erfindung liegt darin, dass durch die Ansteuerung des Druckniveaus innerhalb der Prüfkammer durch die Bewegung des beweglichen Wandelementes über dessen Hubbereich auch der Übergang zwischen einer Belastungsphase und einer Entlastungsphase ohne das Auftreten von Belastungsspitzen ansteuerbar ist. Beim Einsatz einer Unterdruckpumpe traten dagegen beim Umschalten der Pumprichtung regelmäßig Druckpulse auf, welche zu einer ungewünschten Schwingungsanregung beim Messobjekt führten.

In einer möglichen Ausgestaltung der vorliegenden Erfindung handelt es sich bei dem Antrieb um einen Linearantrieb. Dies ermöglicht eine besonders einfache Ansteuerung des Prüfkammervolumens und damit des Drucks innerhalb der Prüfkammer. Beispielsweise kann es sich bei dem Linearantrieb um einen Spindelantrieb handeln. Alternativ wäre auch der Einsatz eines pneumatischen oder hydraulischen Zylinders denkbar.

In einer möglichen Ausgestaltung der vorliegenden Erfindung handelt es sich bei dem Antrieb um einen elektrischen, insbesondere um einen elektromotorischen Antrieb.

In einer bevorzugten Ausgestaltung der vorliegenden Erfindung umfasst der Antrieb und/oder die Druckbelastungseinheit eine Messanordnung, über welche die Position des beweglichen Wandelementes entlang seines Hubweges bestimmt werden kann. Hierbei kann es sich beispielsweise um einen in den Antrieb integrierten Encoder handeln.

In einer möglichen Ausgestaltung der vorliegenden Erfindung ist das bewegliche Wandelement im Bereich der Decke der Prüfkammer angeordnet. Dies erlaubt eine einfache Nachrüstung auch bestehender Prüfgeräte. Weiterhin muss nicht entscheidend in die Konstruktion bekannter Prüfgeräte eingegriffen werden. Beispielsweise kann die bisherige Decke der Prüfkammer um das bewegliche Wandelement ergänzt oder durch dieses ersetzt werden.

Das bewegliche Wandelement kann jedoch auch in beliebigen anderen Wandbereichen, insbesondere im Bereich einer oder mehrerer Seitenwände, oder im Boden der Prüfkammer angeordnet, werden.

In einer möglichen Ausgestaltung der vorliegenden Erfindung sind auf gegenüberliegenden Seiten der Prüfkammer jeweils bewegliche Wandelemente vorgesehen. Bevorzugt sind diese so ausgestaltet, wie dies bereits oben beschrieben wurde. Bevorzugt werden die Wandelemente synchron angesteuert. Bevorzugt erfolgt die Ansteuerung symmetrisch. Durch zwei auf gegenüberliegenden Seiten der Prüfkammer angeordnete bewegliche Wandelemente kann das Entstehen von ungewollten Luftverwirbelungen innerhalb der Prüfkammer nochmals verringert werden.

Die erfindungsgemäße Veränderung des Drucks in der Prüfkammer durch eine Volumenveränderung erlaubt auch ohne weitere Maßnahmen bereits eine deutliche Verringerung des Energiebedarfs, da die hohen Reibungsverluste, welche beim Einsatz vom Pumpen eintreten, vermieden werden können.

In einer möglichen Ausgestaltung der vorliegenden Erfindung umfasst das Prüfgerät weiterhin eine Energierückgewinnungseinheit zur Energierückgewinnung der durch eine Druckentlastung der Prüfkammer freiwerdenden Energie. Hierdurch lässt sich der Energiebedarf des Prüfgerätes noch einmal deutlich verringern.

In einer möglichen Ausgestaltung der vorliegenden Erfindung wird die in der Energierückgewinnungseinheit gespeicherte Energie zu einer erneuerten Druckbelastung der Prüfkammer genutzt.

Insbesondere wird daher zumindest ein Teil der bei der Druckentlastung der Prüfkammer freiwerdenden Energie in der Energierückgewinnungseinheit gespeichert und dann zur Druckbelastung der Prüfkammer über die Druckbelastungseinheit genutzt werden.

In einer möglichen Ausgestaltung der vorliegenden Erfindung kann die Energierückgewinnung über den Antrieb der Druckbelastungseinheit erfolgen, beispielsweise indem der Antrieb bei einer Druckentlastung die freiwerdende Energie umwandelt und diese einem Speicher zugeführt wird. Bei einem elektrischen Antrieb kann dieser beispielsweise als Generator wirken und die Energie in einem elektrischen Energiespeicher gespeichert werden. Bei einem hydraulischen oder pneumatischen Antrieb kann die Energie, welche von dem Antrieb rückgewonnen wird, in einem pneumatischen oder hydraulischen Speicher gespeichert werden.

In einer weiteren Ausgestaltung kann die Energierückgewinnungseinheit den Antrieb der Druckentlastung unterstützen und/oder parallel zu diesem an dem beweglichen Wandelement angreifen.

In einer möglichen Ausgestaltung der vorliegenden Erfindung umfasst die Energierückgewinnungseinheit einen Kraftkompensator, welcher eine Gegenkraft zu der im belasteten Zustand auf der Druckbelastungseinheit und insbesondere dem beweglichen Element lastenden Druckkraft erzeugt. Hierdurch wird die Kraft, welche vom Antrieb aufgebracht werden muss, verringert.

In einer möglichen Ausgestaltung der vorliegenden Erfindung kann die Energierückgewinnungseinheit mindestens eine Federeinheit umfassen, insbesondere eine Luftfedereinheit. Die Federeinheit kann eine oder mehrere Federn, welche bei einer Druckentlastung der Prüfkammer gespannt werden, und bei einer Druckbelastung den Antrieb unterstützen, umfassen,

In einer möglichen Ausgestaltung der vorliegenden Erfindung kann die Energierückgewinnungseinheit mindestens ein linear arbeitendes Kraftelement umfassen. Insbesondere kann es sich hierbei um ein Federelement, insbesondere um ein Luftfederelement handeln, insbesondre ein in Abhängigkeit von der aufgebrachten Kraftlängenveränderliches Federelement.

In einer möglichen Ausgestaltung der vorliegenden Erfindung ist das linear arbeitende Kraftelement so an dem beweglichen Wandelement abgelenkt, dass der Anteil der effektiv in Bewegungsrichtung auf das bewegliche Element wirkenden Kräfte der Energierückgewinnungseinheit an die in der jeweiligen Hubposition wirkenden statischen Kräfte auf das bewegliche Wandelement angepasst ist und diese bevorzugt zumindest teilweise und weiter bevorzugt weitgehend ausgleicht.

In einer möglichen Ausgestaltung der vorliegenden Erfindung steht ein bewegliches Wandelement der Druckbelastungseinheit so mit mindestens einem linear arbeitenden Kraftelement, insbesondre ein Federelement, in Verbindung, dass sich die Kraftrichtung des Kraftelementes gegenüber einer Bewegungsrichtung des beweglichen Wandelementes über den Hubbereich des beweglichen Wandelementes ändert. Hierdurch ist eine entsprechende Änderung der in Bewegungsrichtung wirkenden Kraftanteile möglich.

In einer bevorzugten Ausgestaltung vergrößert sich der Winkel zwischen der Kraftrichtung des Kraftelementes und der Bewegungsrichtung des beweglichen Wandelementes bei einer Bewegung des Wandelementes in Entlastungsrichtung und verkleinert sich bei einer Bewegung in Belastungsrichtung. Hierdurch ist der Anteil der durch das Kraftelement erzeugten Kraft, welche in Bewegungsrichtung wirkt, in einer ersten, belasteten Stellung größer als in einer zweiten, entlasteten Stellung.

In einer möglichen Ausgestaltung der vorliegenden Erfindung steht das bewegliche Wandelement der Druckbelastungseinheit über mindestens zwei Kraftelemente, insbesondere in Form von Federelementen, so mit dem Prüfkammeraufbau in Verbindung, dass sich die quer zur Bewegungsrichtung des beweglichen Wandelementes wirkenden Anteile der durch die Kraftelemente erzeugenden Kräfte gegenseitig aufheben und die in Bewegungsrichtung wirkenden Anteile addieren. Beispielsweise ist eine bezüglich einer Mittelachse des Wandelementes symmetrische Anordnung der mehreren Kraftelemente denkbar.

In einer möglichen Ausgestaltung der vorliegenden Erfindung erzeugt die Druckbelastungseinheit einen Unterdruck in der Prüfkammer. Insbesondere ist die Druckbelastungseinheit daher so ausgestaltet, dass sie das Volumen der Prüfkammer unter Luftabschluss zur Umgebung vergrößert, um den Druck im Inneren der Prüfkammer ausgehend vom Umgebungsdruck zu verringern.

Insbesondere ist das bewegliche Wandelement nach außen bewegbar, um das Volumen der Prüfkammer zu vergrößern.

Bei dem erfindungsgemäßen Prüfgerät handelt es sich bei bereits erwähnt um ein Reifenprüfgerät. Dieses kann so ausgestaltet sein, wie dies bereits eingangs im Hinblick auf den Stand der Technik beschrieben wurde.

Innerhalb der Prüfkammer kann das Reifenprüfgerät eine Auflagefläche aufweisen, auf welcher der Reifen aufliegt. Insbesondere kann der Reifen dabei mit seiner Seitenwand auf einer Auflagefläche aufliegen. Alternativ wäre es denkbar, dass der Reifen mit dem Wulst auf Halteelementen aufliegt.

In einer möglichen Ausgestaltung der vorliegenden Erfindung ist der Messkopf innerhalb der Prüfkammer angeordnet.

Bevorzugt kann mindestens ein Messkopf über einer Verfahranordnung in das Innere des Reifens verfahren werden.

In einer möglichen Ausgestaltung der vorliegenden Erfindung ist der Messkopf relativ zum Reifen um die Achse des Reifens drehbar, um den Umfang des Reifens in mehreren Drehpositionen abschnittsweise zu prüfen. Alternativ oder zusätzlich können mehrere Messköpfe eingesetzt werden, um unterschiedliche Abschnitte des Umfangs des Reifens zu prüfen.

Gemäß einer möglichen Ausgestaltung der vorliegenden Erfindung kann es sich bei dem Prüfgerät um ein auf einem interferometrischen Messprinzip arbeitendes Prüfgerät handeln, wobei das Prüfgerät bevorzugt Shearographisch arbeitet. Bei dem Messkopf kann es sich um einen interferometrischen Messkopf handeln, insbesondere um einen Shearographie-Messkopf.

Die vorliegende Erfindung umfasst weiterhin ein Verfahren zum Prüfen eines Messobjekts mit einem Prüfgerät, wie es oben beschrieben wurde, mit den Schritten:
- Einbringen des Messobjekts in die Prüfkammer des Prüfgerätes, und
- Vermessen des in der Prüfkammer angeordneten Messobjekts bei unterschiedlichen Druckwerten.

Das Verfahren ist dadurch gekennzeichnet, dass die Veränderung des Drucks in der Prüfkammer durch Veränderung des Prüfkammervolumens unter Luftabschluss zur Umgebung erfolgt.

Durch das erfindungsgemäße Verfahren ergeben sich die gleichen Vorteile, welche bereits oben im Hinblick auf das erfindungsgemäße Prüfgerät beschrieben wurden.

Bevorzugt erfolgt das erfindungsgemäße Verfahren so, wie dies bereits oben im Hinblick auf das Prüfgerät beschrieben wurde.

Die vorliegende Erfindung wird nun anhand von Ausführungsbeispielen und Zeichnungen näher beschrieben.

Dabei zeigen:
- Fig. 1: ein Ausführungsbeispiel eines erfindungsgemäßen Prüfgerätes in einer Prinzipdarstellung von der Seite,
- Fig. 2: ein Ausführungsbeispiel des erfindungsgemäßen Prüfgerätes in einer perspektivischen Ansicht, wobei die Druckbelastungseinheit in einem unbelasteten Zustand gezeigt ist,
- Fig. 3: das in Fig. 2 gezeigte Ausführungsbeispiel, wobei die Druckbelastungseinheit in einem Druckbelastungszustand gezeigt ist,
- Fig. 4a und 4b: die Druckbelastungseinheit des in Fig. 2 und 3 gezeigten Prüfgerätes in einem Druckbelastungszustand und einem unbelasteten Zustand,
- Fig. 5a und 5b: eine Ausgestaltung der Druckbelastungseinheit mit einer Energierückgewinnungseinheit in einem unbelasteten Zustand in einer perspektivischen Darstellung und einer Schnittansicht, und
- Fig. 6a und 6b: die Ausgestaltung der Druckbelastungseinheit mit einer Energierückgewinnungseinheit in einem Druckbelastungszustand in einer perspektivischen Darstellung und einer Schnittansicht.

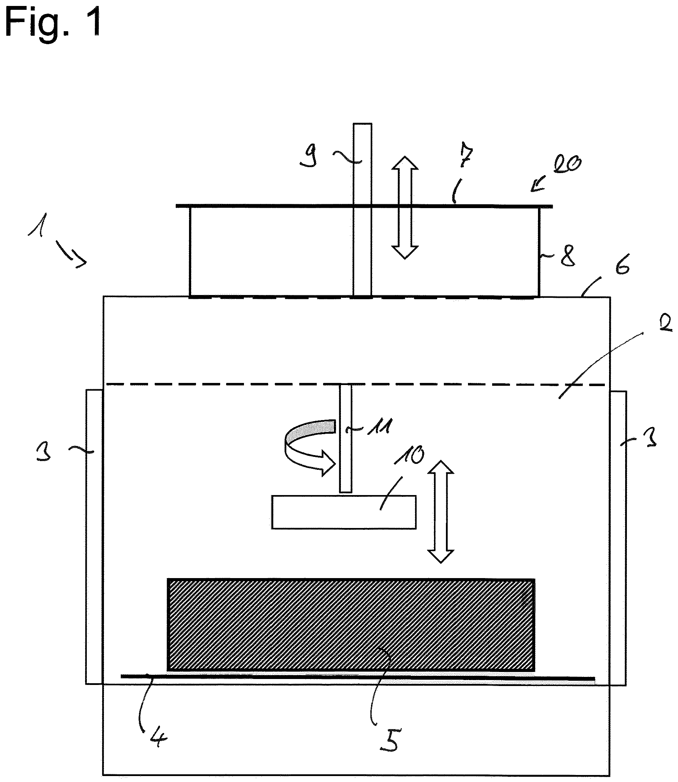

Figur 1 zeigt ein erfindungsgemäßes Prüfgerät in einer Prinzipdarstellung von der Seite. Das Prüfgerät 1 weist eine Prüfkammer 6 auf, in welcher ein zu prüfendes Messobjekt 5 angeordnet werden kann. Im Ausführungsbeispiel ist hierfür innerhalb der Prüfkammer 6 eine Auflagefläche 4 vorgesehen, auf welcher das Messobjekt 5 angeordnet wird. Weiterhin ist mindestens ein Messkopf 10 vorgesehen, über welchen das in der Prüfkammer 6 angeordnete Messobjekt 5 vermessen wird.

Im Ausführungsbeispiel weist das Prüfgerät Türelemente 3 auf, über welche die Prüfkammer geöffnet und geschlossen werden kann, um Messobjekte in die Prüfkammer einzubringen und aus dieser zu entnehmen. Im Ausführungsbeispiel sind zwei Türelemente 3 in gegenüberliegenden Seitenwandbereichen der Prüfkammer angeordnet. Dies erlaubt es, Messobjekte auf der einen Seite in die Prüfkammer einzuführen und auf der anderen Seite aus der Prüfkammer heraus zu befördern. Es sind jedoch auch beliebige andere Ausgestaltungen der Prüfkammer denkbar.

Das Prüfgerät weist eine Druckbelastungseinrichtung 20 auf, über welche der Druck im Inneren der Prüfkammer 6 kontrolliert veränderbar ist. Die Druckbelastungseinheit 20 umfasst ein bewegliches Wandelement 7, über dessen Bewegung das Volumen der Prüfkammer 6 verändert werden kann, um hierdurch den Druck innerhalb der Prüfkammer zu verändern.

Hierfür ist ein Antrieb 9 vorgesehen, über welches das bewegliche Wandelement 7 entlang eines Hubweges bewegt werden kann, um so über die Position des beweglichen Wandelementes das Innenvolumen der Prüfkammer 6 und hierüber den Druck innerhalb der Prüfkammer anzusteuern.

Das bewegliche Wandelement 7 steht hierbei über eine Dichtung 8 mit dem sonstigen Prüfkammeraufbau in Verbindung. Die Bewegung des beweglichen Wandelementes 7 erfolgt unter Luftabschluss der Prüfkammer gegenüber der Umgebung, sodass durch die Veränderung des Innenvolumens eine entsprechende Veränderung des Drucks im Inneren der Prüfkammer erreicht wird.

Im Ausführungsbeispiel handelt es sich bei dem Antrieb 9 um einen Linearantrieb, wobei das bewegliche Element linear entlang eines Hubweges verfahrbar ist. Der Hubweg und damit die Bewegungsrichtung steht im Ausführungsbeispiel senkrecht auf der Haupterstreckungsebene des Wandelementes 7.

Es sind jedoch auch andere Ausgestaltungen des Hubwegs oder des Antriebs denkbar. Beispielsweise wäre denkbar, das Wandelement klappenartig verschwenkbar über eine entsprechende Dichtung an dem sonstigen Prüfkammeraufbau anzuordnen und entsprechend einen Antrieb vorzusehen, welcher das Wandelement verschwenkt.

Im Ausführungsbeispiel handelt es sich bei dem Antrieb 9 um einen Servoantrieb, über welchen die Position des Hubelementes entlang des Hubweges ansteuerbar ist. Hierdurch lässt sich der Druckverlauf innerhalb der Prüfkammer gezielt ansteuern.

Der Hubweg ist zum einen von der für die Prüfung benötigten Druckänderung, insbesondere dem benötigten Unterdruck, und zum anderen von der Dichtigkeit der Prüfkammer abhängig. Da der Luftabschluss, unter welchem die Veränderung des Prüfkammervolumens erfolgt, nie vollständig ist, muss ein entsprechend größerer Hubweg als der bei einem kompletten Luftabschluss notwendige Hubweg vorgesehen werden. Beispielsweise kann hierbei ein zusätzlicher Faktor von bspw. 10 bis 20 % des Hubwegs vorgesehen werden.

Das Volumen der Prüfkammer ist umgekehrt proportional zum Druck in der Messkammer. Hierdurch ist bspw. für eine Verringerung des Drucks um ca. 0,05 bar eine Volumenvergrößerung um ca. 5 % notwendig (obwohl der Zusammenhang nicht wirklich linear ist). Weist in einem möglichen Ausführungsbeispiel die Prüfkammer bspw. ein Volumen von 5 m³ auf, solle dieses um 0,3 m³ vergrößert werden können, um einen Unterdruck von ca. 50 mBar (unter Berücksichtigung eventueller Undichtigkeiten) zur Verfügung stellen zu können.

Bei dem in Figur 1 gezeigten Prüfgerät handelt es sich bei dem mindestens einem Messkopf 10 bevorzugt um ein interferometrischen Messkopf, insbesondre um einen Shearographie-Messkopf. Hierbei wird Laserlicht auf die Oberfläche des Reifens gestrahlt und über eine Optik des Messkopfes, welches ein Shearing-Element umfasst, in zwei Teilstrahlen auf einen Sensor reflektiert. Hierdurch werden Phasenbilder des Messobjektes aufgenommen.

Eine Steuerung des Prüfgerätes steuert die Druckbelastungseinheit 9 und den mindestens einen Messkopf 10 so an, dass bei mehreren Druckbelastungszuständen des Messobjektes Aufnahmen erzeugt werden, welche dann durch die Steuerung ausgewertet werden, um das Messobjekt zu prüfen. Insbesondere werden dabei Phasendifferenzbilder erzeugt, welche die Verformung des Messobjektes durch die Druckbelastung oder Entlastung zeigen.

Im Rahmen eines Messzyklus erfolgt bevorzugt mindestens eine Druckbelastung und mindestens eine Druckentlastung. Die Aufnahmen können während der Druckbelastung, während der Druckentlastung oder während beider Phasen aufgenommen werden.

Das Prüfgerät kann eine Mehrzahl von Messköpfen aufweisen, um mehrere Sektoren des Messobjektes gleichzeitig zu prüfen. Bevorzugt ist zumindest ein Teil der Messköpfe in das Innere des Reifens verfahrbar, um die Innenseite des Reifens zu prüfen. Weiterhin können Messköpfe vorgesehen sein, um die Seitenwände des Reifens von außen zu prüfen.

Bei dem in Figur 1 gezeigten Prüfgerät handelt es sich um ein Reifenprüfgerät zur Prüfung eines Reifens 5.

In einer möglichen Ausgestaltung kann die Messkopfanordnung um eine Rotationsachse, welche mit der Rotationsachse des Reifens zusammenfällt, drehbar sein, um den Reifen in mehreren Positionen in Umfangsrichtung zu prüfen. Die Messköpfe können jedoch auf drehfest gegenüber der Auflage 4 für den Reifen angeordnet sein.

Bei den in Figur 1 in einer Prinzipdarstellung gezeigten Ausführungsbeispiel ist die Druckbelastungseinheit 20 im Bereich der Decke der Prüfkammer 6 angeordnet. Sie könnte jedoch in gleicher Weise im Bereich einer der Seitenwände oder im Bereich des Bodens angeordnet sein. Weiterhin könnten mehrere Druckbelastungseinrichtung in gegenüberliegenden Wandbereichen der Prüfkammer vorgesehen sein.

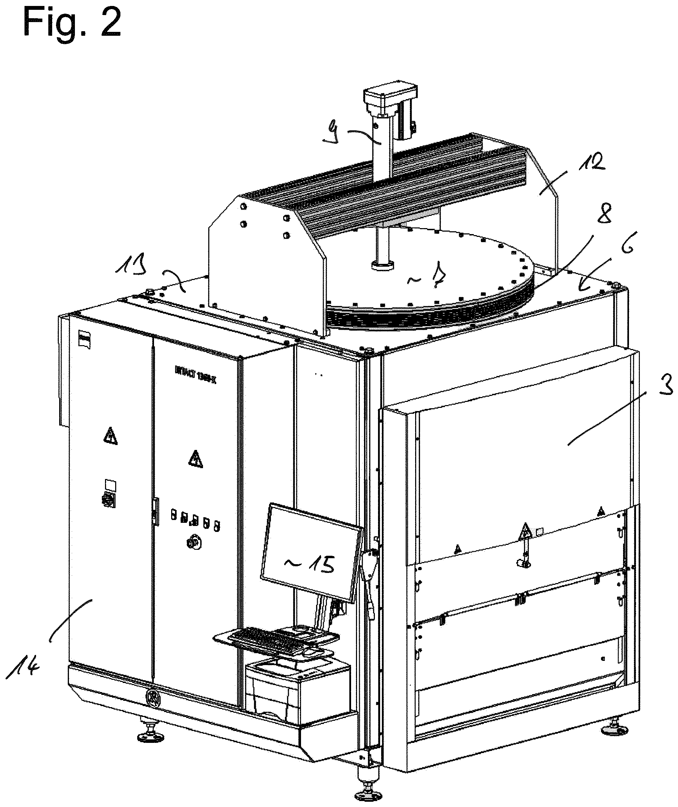

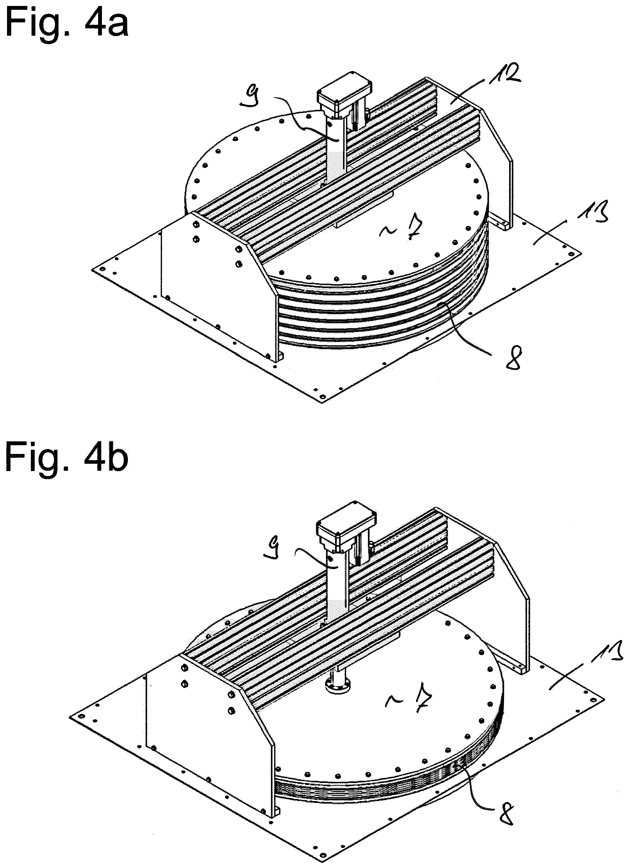

Figuren 2 - 4 zeigen ein konkretes Ausführungsbeispiel eines Prüfgeräts und der hierbei eingesetzten Druckbelastungseinheit. Das konkrete Ausführungsbeispiel entspricht in seinem Aufbau der bereits in Figur 1 gezeigten grundsätzlichen Ausgestaltung, so dass zunächst auf die Beschreibung zu Figur 1 verwiesen wird.

In Figur 2 ist das Prüfgerät in einer perspektivischen Ansicht von außen gezeigt. Fig. 2 zeigt zusätzlich zu den in Fig. 1 gezeigten Elementen des Prüfgerätes einen Steuerschrank 14 mit der Steuerung des Prüfgerätes, sowie eine Ein-/Ausgabeeinheit 15 für die Steuerung, insbesondere mit einer Anzeige sowie Eingabeelementen. Weiterhin ist die konkrete Ausgestaltung der Türelemente 3 als in vertikale Richtung arbeitende Schiebetüren gezeigt.

Figur 2 zeigt auch eine konkrete konstruktive Ausgestaltung der Druckbelastungseinheit. Das bewegliche Wandelement 7 steht hierbei über eine flexible Dichtung 8 mit einem Wandbereich der Prüfkammeranordnung 6 in Verbindung. Im Ausführungsbeispiel steht das bewegliche Wandelement 7 dabei mit einer Deckenplatte 13 der Prüfkammeranordnung über die flexible Dichtung 8 in Verbindung. Die flexible Dichtung 8 erlaubt daher eine Bewegung des beweglichen Wandelementes 7 gegenüber der Prüfkammeranordnung und hierdurch eine Veränderung des Prüfkammervolumens unter Luftabschluss zur Umgebung.

Im Ausführungsbeispiel wird als Dichtung 8 ein Faltenbalg eingesetzt. Dieser erlaubt einen relativ großen Hubweg. Das Wandelement 7 ist als eine starre Platte ausgeführt, so dass die durch eine Bewegung des Wandelementes erzeugte Volumenveränderung im Wesentlichen der Grundfläche des flexiblen Wandelementes 7 multipliziert mit dem Hubweg entspricht.

Alternativ wäre denkbar, als bewegliches Wandelement 7 eine Membran einzusetzen.

Als Antrieb kommt im Ausführungsbeispiel ein Linearantrieb 9 zum Einsatz, bspw. ein Spindelantrieb mit einem elektrischen Antriebsmotor. Der Antrieb 9 ist an ein Portalelement 12 angeordnet, welches mit der Prüfkammeranordnung in Verbindung steht und die Kräfte aufnimmt, welche bei der Bewegung des beweglichen Wandelementes 7 entstehen. Im Ausführungsbeispiel ist das Portalelement 12 auf gegenüberliegenden Seiten des beweglichen Wandelementes 7 an der Deckenplatte 13 der Prüfkammer befestigt.

Im Ausführungsbeispiel weist das bewegliche Wandelement eine kreisförmige Grundfläche auf. Hierdurch kann die Dichtung 8 die auftretenden Kräfte besonders gut auffangen.

Insbesondere ist die Ausführung so gestaltet, dass die Druckbelastung der Dichtung 8 und insbesondere des Faltenbalgs radial nach außen erfolgt, da in diese Richtung die auftretenden Druckkräfte durch die Dichtung und insbesondere den Faltenbalg aufgenommen werden können.

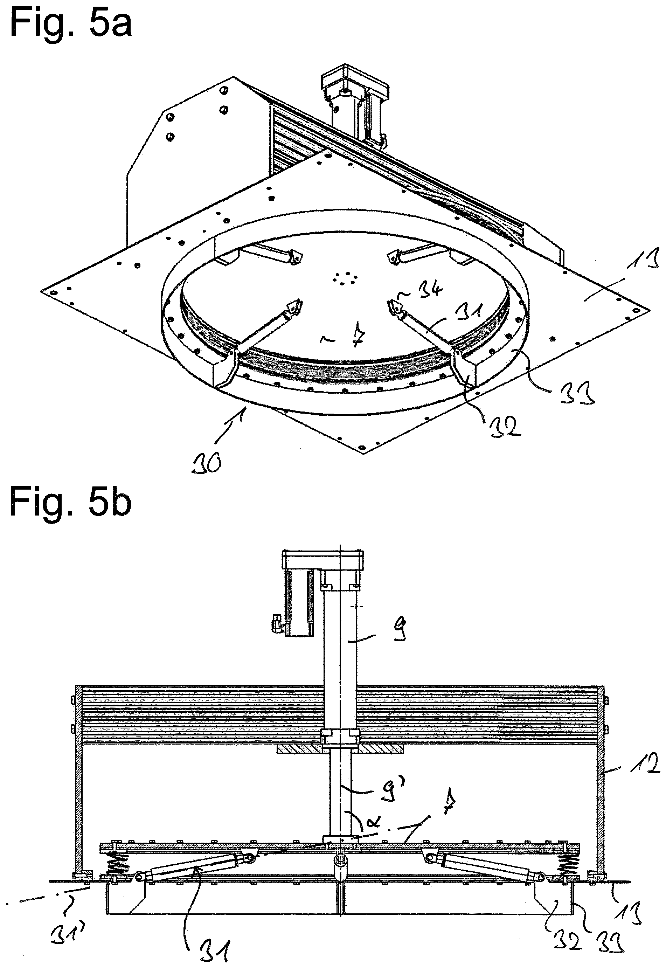

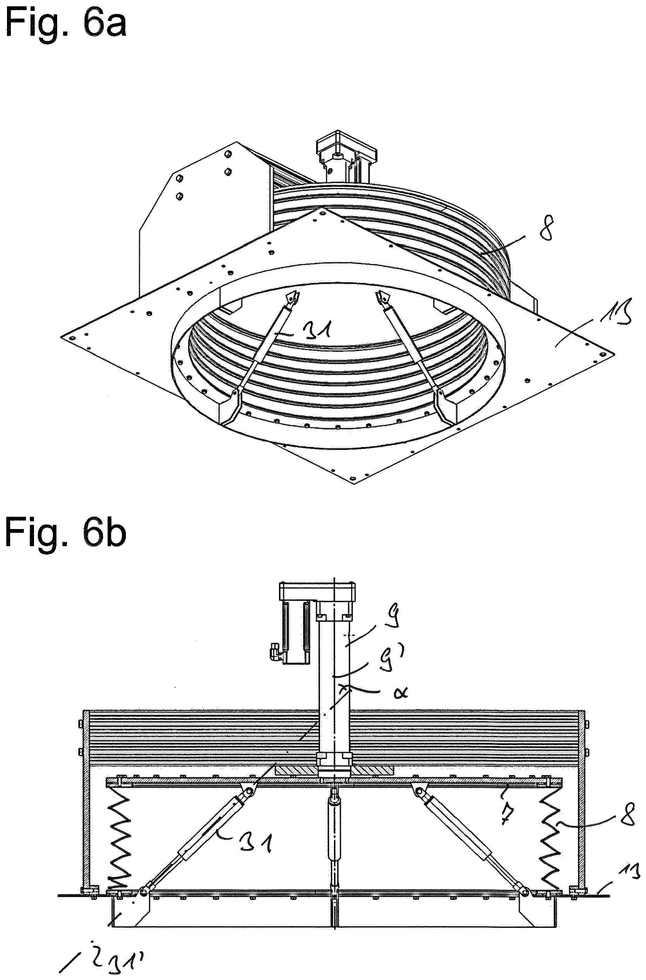

Wie in Figur 5 und 6 ersichtlich, weist der statische Prüfkammeraufbau eine entsprechende Öffnung auf, welche von dem beweglichen Wandelement abgedeckt wird.

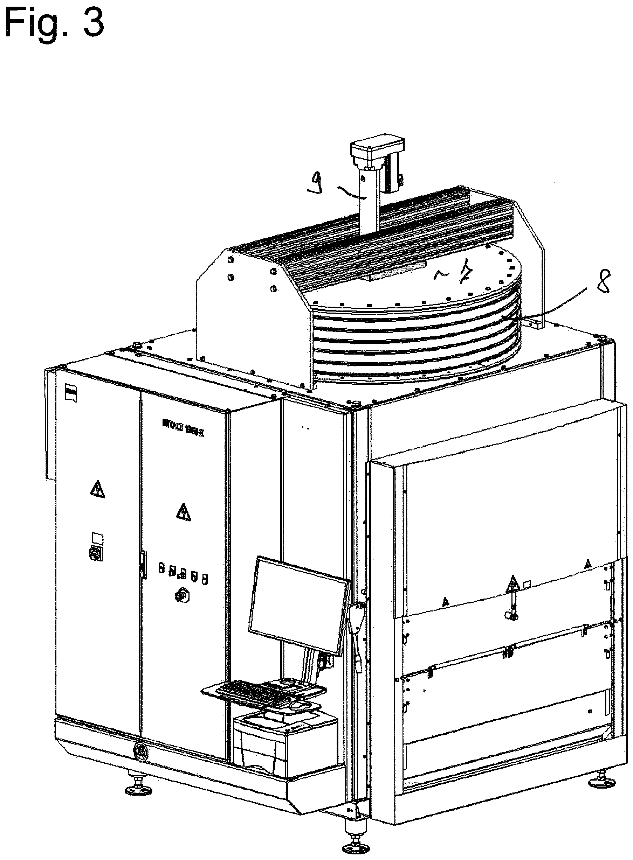

Im Ausführungsbeispiel erzeugt die Druckbelastungseinheit einen Unterdruck, indem das bewegliche Wandelement 7 bei geschlossener Prüfkammer nach außen wegbewegt wird, um das Volumen der Prüfkammer zu vergrößern. Die Druckentlastung erfolgt, indem das bewegliche Element 7 wieder zurück in seine Ausgangsstellung verfahren wird. Die Ausgangsstellung ist dabei in Figuren 2, 4b und 5 gezeigt, die belastete Stellung in Figuren 3, 4a und 6.

In einem Ausführungsbeispiel wird die Druckveränderung, insbesondere durch Erzeugung eines Unterdrucks, vorgenommen, um mittels Shearographie die Fehlstellen des Messobjekts sichtbar zu machen.

Beispielsweise kann im Prüfablauf der Druck in der Prüfkammer um 5 mBar bis 100 mar, insbesondere um 15 mBar bis 75 mBar, beispielsweis um 25 bis 50 mbar gegenüber dem Umgebungsdruck abgesenkt und wieder angeglichen werden. Die Bildaufnahme mehrerer Bilder des Shearographiesensors erfolgt während der Phase des Absenkens Drucks oder während des Wiederangleichens an den Umgebungsdruck oder - bei einem beispielsweise symmetrischen Belastungszyklus - auch während beider Phasen. Aus den aufgenommenen Bildern kann so eine Shearogramm des beobachteten Reifenbereichs berechnet werden, anhand dessen die Fehlstellen des Reifens erkennbar sind.

Durch diese erfindungsgemäße Lösung lässt sich die eingangs beschriebene Luftströmungsproblematik und deren negativer Einfluss auf die Bildqualität verringern oder sogar ganz beseitigen, da deutlich weniger Luftbewegungen stattfinden. Das Unterdruck/Zeit-Verhalten (Unterdruckprofil) lässt sich über die Deckelposition (Servoachse) genau steuern. Dadurch kann - ggf. zusätzlich in Verbindung mit neuen Auswertealgorithmen - eine bessere Bildqualität erreicht werden.

Weiterhin kann das erfindungsgemäße Prüfgerät wesentlich schneller als bekannte Prüfgeräte arbeiten. Die Evakuierungszeit kann erheblich verkürzt werden.

Weiterhin lässt sich das bei bekannten Prüfgeräten mit Unterdruckpumpen nicht exakte Umschalten von Evakuieren auf Ventilieren besser beherrschen, was ebenso zur Verbesserung der Bildqualität und zur Verkürzung der Prüfzeit beiträgt.

Im Vergleich zu bekannten Prüfgeräten kann das erfindungsgemäße Prüfgerät weiterhin einen deutlich besseren Wirkungsgrad aufweisen. So kann sich auch ohne weitere Maßnahmen bereits eine Energieeinsparung um ca. 50% ergeben. Ebenfalls wird die Lärmbelästigung gesenkt.

In Figuren 5 und 6 ist weiterhin eine Energierückgewinnungseinheit gezeigt, durch welche die bei der Druckentlastung frei werdende Energie gespeichert und für die Druckbelastung wiederverwendet werden kann.

Im Ausführungsbeispiel ist die Energierückgewinnungseinheit als Kraftkompensator ausgestaltet, welcher der Druckkraft entgegenwirkt. Bevorzugt ist der Kraftkompensator so ausgestaltet, dass er sowohl statische Gewichtskräfte als auch statische Druckkräfte kompensiert.

Im Ausführungsbeispiel sind hierfür mehrere Druckfedern 31 vorgesehen, welche mit einer Seite am beweglichen Wandelement 7, und mit der anderen Seite am Prüfkammeraufbau verschwenkbar angelenkt sind. Durch die Anordnung verändert sich der Winkel α zwischen der Kraftrichtung 31' der Druckfedern 31 und der Bewegungsrichtung 9' des beweglichen Elementes über den Hubweg. In der in Figur 6 gezeigten belasteten Stellung ist der Winkel α kleiner als in der in Figur 5 gezeigten entlasteten Stellung, sodass die Komponente der durch die Druckfedern erzeugten Gegenkraft, welche in Bewegungsrichtung wirkt, größer ist.

Die mehreren Druckfedern 31 sind symmetrisch angeordnet, sodass sich die quer zur Bewegungsrichtung 9' des beweglichen Elementes 9 wirkenden Kraftanteile gegenseitig aufheben. Die in Bewegungsrichtung wirkende Kraftanteile addieren sich hingegen.

Die Konstruktionsweise kann über Federpakete oder Gasdruckfedern einfach gelöst werden. Diese werden im Ausführungsbeispiel so angebracht, dass bei hochfahrendem Deckel eine zunehmende Gegenkraft auf den Deckel erfolgt.

Bevorzugt ist der Kraft-Kompensator so ausgestaltet, dass diese Gegenkraft gleich der Summe der beweglichen Masse und dem entstehenden Unterdruck ist, so dass die auf das bewegliche Wandelement wirkenden statischen Kräfte über den Hubweg hinweg im Gleichgewicht stehen.

Im Ausführungsbeispiel sind hierfür mehrere sternförmig angeordnete Federn 31 vorgesehen, deren äußere Enden über Lagerstellen 32 an einem Rahmen 33 einer Öffnung in einer Wand der Prüfkammer und deren innere Enden über Lagerstellen 34 am beweglichen Wandelement 7 angelenkt sind, so dass sich der Winkel der Federn zur Bewegungsrichtung des beweglichen Elementes je nach Position des beweglichen Wandelementes 7 ändert.

Bevorzugt sind die Winkel so gewählt, dass die Kennlinie der Federn im Wesentlichen der Kennlinie entspricht, welche das bewegliche Element aufweist. Diese Kennlinie ergibt sich aus der statischen Gewichtskraft des beweglichen Elementes sowie der durch den Unterdruck auf dieses wirkenden Druckkraft.

Durch die Ausführung mit einer Energierückgewinnungseinheit bzw. einem zusätzlichen Kraft-Kompensator kann die Energieeinsparung weiter verbessert werden. Mit einem Kraft-Kompensator können die durch die beweglichen Massen entstehenden Prozesskräfte aufgehoben werden. Hierdurch wird der notwendige Energiebedarf auf einen Bruchteil bekannter Prüfgeräte (ca. 20%) reduziert.

## Patentansprüche

1. Prüfgerät, beim welchem es sich um ein Reifenprüfgerät handelt, mit einer Prüfkammer (6), einer Druckbelastungseinheit (20) zur Veränderung des Drucks in der Prüfkammer und mindestens einem Messkopf (10) zum Vermessen eines in der Prüfkammer (6) angeordneten Messobjekts bei unterschiedlichen, durch die Druckbelastungseinheit (20) erzeugten Druckwerten, **dadurch gekennzeichnet, dass** die Druckbelastungseinheit (20) zur Veränderung des Drucks in der Prüfkammer (6) das Prüfkammervolumen unter Luftabschluss zur Umgebung verändert, wobei die Druckbelastungseinheit (20) ein gegenüber dem sonstigen Prüfkammeraufbau bewegliches Wandelement (7) der Prüfkammer (6) umfasst, über dessen Bewegung das Prüfkammervolumen veränderbar ist.

2. Prüfgerät nach Anspruch 1, wobei die Veränderung des Volumens und/oder Drucks bevorzugt über die Position des beweglichen Wandelementes (7) ansteuerbar ist.

3. Prüfgerät nach Anspruch 2, wobei das bewegliche Wandelement (7) über ein flexibles Dichtelement (8), insbesondere einen Faltenbalg, abgedichtet mit dem sonstigen Prüfkammeraufbau in Verbindung steht, und/oder wobei das bewegliche Wandelement (7) durch eine flexible Membran gebildet wird, welche abgedichtet mit dem sonstigen Prüfkammeraufbau in Verbindung steht.

4. Prüfgerät nach Anspruch 2 oder 3, wobei das bewegliche Wandelement (7) bei Projektion in eine sich senkrecht zu seiner Bewegungsrichtung erstreckende Ebene eine Fläche von mindestens 5 % des Quadrats der Kubikwurzel des Volumens der Prüfkammer (6) aufweist, bevorzugt mindestens 10 %, weiter bevorzugt mindestens 30 %, und/oder wobei das bewegliche Wandelement (7) bei Projektion in eine sich senkrecht zu seiner Bewegungsrichtung erstreckende Ebene eine Fläche von mindestens 0,05 qm aufweist, bevorzugt von mindestens 0,2 qm, weiter bevorzugt von mindestens 0,5 qm.

5. Prüfgerät nach einem der vorangegangenen Ansprüche, wobei die Druckbelastungseinheit (20) das Volumen der Prüfkammer (6) um mindestens 0,5 % verändern kann, insbesondere um mindestens 1 %, und/oder wobei wobei die Druckbelastungseinheit (20) durch die Veränderung des Volumens der Prüfkammer (6) den Druck in der Prüfkammer (6) um mindestens 5 mBar verändern kann, wobei die Veränderung des Volumens und/oder Drucks bevorzugt über die Position des beweglichen Elementes (7) ansteuerbar ist.

6. Prüfgerät nach einem der vorangegangenen Ansprüche, mit einem Antrieb (9), über welchen das bewegliche Wandelement (7) bewegbar ist, wobei das Prüfgerät bevorzugt eine Steuerung aufweist, welche den Antrieb und den mindestens einen Messkopf (10) so ansteuert, dass das Messobjekt (5) in mindestens einem Messzyklus, in welchem der Druck in der Druckkammer (6) durch eine Bewegung des beweglichen Wandelementes (7) verändert wird, durch den mindestens einen Messkopf (10) geprüft wird.

7. Prüfgerät nach Anspruch 6, wobei es sich bei dem Antrieb (9) um einen Linearantrieb handelt.

8. Prüfgerät nach einem der vorangegangenen Ansprüche, wobei das bewegliche Wandelement (7) im Bereich der Decke der Prüfkammer (6) angeordnet ist und/oder wobei auf gegenüberliegenden Seiten der Prüfkammer (6) bewegliche Wandelemente (7) vorgesehen sind.

9. Prüfgerät nach einem der vorangegangenen Ansprüche, mit einer Energierückgewinnungseinheit zur Energierückgewinnung aus der durch eine Druckentlastung der Prüfkammer (6) freiwerdenden Energie, wobei bevorzugt die in der Energierückgewinnungseinheit gespeicherte Energie zur erneuten Druckbelastung der Prüfkammer (6) genutzt wird.

10. Prüfgerät nach Anspruch 9, wobei die Energierückgewinnungseinheit einen Kraftkompensator umfasst, welcher eine Gegenkraft zu der im belasteten Zustand auf der Druckbelastungseinheit und insbesondere dem beweglichen Element lastenden Druckkraft erzeugt.

11. Prüfgerät nach Anspruch 9 oder 10, wobei die Energierückgewinnungseinheit mindestens eine Federeinheit (31) umfasst, insbesondere eine Luftfedereinheit und/oder wobei die Energierückgewinnungseinheit mindestens ein linear arbeitendes Kraftelement umfasst.

12. Prüfgerät nach einem der vorangegangenen Ansprüche, wobei ein bewegliches Wandelement (7) der Druckbelastungseinheit (20) so mit mindestens einem linear arbeitenden Kraftelement, insbesondere einem Federelement (31), in Verbindung steht, dass sich die Kraftrichtung des Kraftelementes gegenüber einer Bewegungsrichtung des beweglichen Wandelements über den Hubbereich des beweglichen Wandelements ändert.

13. Prüfgerät nach einem der vorangegangenen Ansprüche, wobei das bewegliche Wandelement (7) der Druckbelastungseinheit (20) über mindestens zwei Kraftelemente, insbesondere in Form von Federelementen (31), so mit dem Prüfkammeraufbau in Verbindung steht, dass sich die quer zur Bewegungsrichtung des beweglichen Wandelementes (7) wirkenden Anteile der durch die Kraftelemente erzeugten Kräfte gegenseitig aufheben und die in Bewegungsrichtung wirkenden Anteile addieren.

14. Prüfgerät nach einem der vorangegangenen Ansprüche, wobei es sich bei dem Messkopf (10) um einen interferometrischen Messkopf handelt, insbesondere einen Shearografie-Messkopf, und/oder wobei die Druckbelastungseinheit einen Unterdruck in der Prüfkammer (6) erzeugt.

15. Verfahren zum Prüfen eines Messobjekts mit einem Prüfgerät (6) nach einem der vorangegangen Ansprüche, mit den Schritten:
- Einbringen des Messobjekts (5) in die Prüfkammer (6) des Prüfgerätes,
und
- Vermessen des in der Prüfkammer (6) angeordneten Messobjekts (5) bei unterschiedlichen Druckwerten,
**dadurch gekennzeichnet,**
**dass** die Veränderung des Drucks in der Prüfkammer (6) durch Veränderung des Prüfkammervolumens unter Luftabschluss zur Umgebung erfolgt.

## Claims

1. Testing apparatus, which is a tyre testing apparatus, with a testing chamber (6), a pressure loading unit (20) for changing the pressure in the testing chamber and at least one measuring head (10) for measuring a measurement object arranged in the testing chamber (6) at different pressure values (20) produced by the pressure loading unit,
**characterized**
**in that**, for changing the pressure in the testing chamber, the pressure loading unit (20) changes the volume of the testing chamber (6) while excluding air from the surroundings, wherein the pressure loading unit (20) comprises a wall element (7) of the testing chamber which is movable with respect to the rest of the testing chamber structure (6) and by the movement of which the volume of the testing chamber can be changed.

2. Testing apparatus according to Claim 1, wherein the changing of the volume and/or pressure can preferably be controlled by way of the position of the movable wall (7) element.

3. Testing apparatus according to Claim 2, wherein the movable wall element (7) is in connection with the rest of the testing chamber structure (8) in a sealed manner by way of a flexible sealing element, in particular a bellows, and/or wherein the movable wall element (7) is formed by a flexible diaphragm which is in connection with the rest of the testing chamber structure in a sealed manner.

4. Testing apparatus according to Claim 2 or 3, wherein, when projected into a plane extending perpendicularly to its direction of movement, the movable wall element (7) has a surface area of at least 5% of the square of the cube root of the volume of the testing chamber (6), preferably at least 10%, more preferably at least 30%, and/or wherein, when projected into a plane extending perpendicularly to its direction of movement, the movable wall element (7) has a surface area of at least 0.05 m², preferably of at least 0.2 m², more preferably of at least 0.5 m².

5. Testing apparatus according to one of the preceding claims, wherein the pressure loading unit (20) can change the volume of the testing chamber (6) by at least 0.5%, in particular by at least 1%, and/or wherein, by changing the volume of the testing chamber, the pressure loading unit (20) can change the pressure in the testing chamber (6) by at least 5 mbar, wherein the changing of the volume and/or pressure can preferably be controlled by way of the position of the movable element (7).

6. Testing apparatus according to one of the preceding claims, with a drive (9) by way of which the movable wall element (7) can be moved, wherein the testing apparatus preferably has a controller which controls the drive and the at least one measuring head (10) in such a way that the measurement object (5) is tested by the at least one measuring head (10) in at least one measurement cycle, in which the pressure in the pressure chamber (6) is changed by a movement of the movable wall element (7).

7. Testing apparatus according to Claim 6, wherein the drive (9) is a linear drive.

8. Testing apparatus according to one of the preceding claims, wherein the movable wall element (7) is arranged in the region of the ceiling of the testing chamber (6) and/or wherein movable wall elements (7) are provided on opposite sides of the testing chamber (6).

9. Testing apparatus according to one of the preceding claims, with an energy recovery unit for the energy recovery of the energy released by relieving the pressure in the testing chamber (6), wherein the energy stored in the energy recovery unit is preferably used for renewed pressure loading of the testing chamber (6).

10. Testing apparatus according to Claim 9, wherein the energy recovery unit comprises a force compensator, which produces a counter force to the compressive force which in the loaded state exerts a load on the pressure loading unit and in particular the movable element.

11. Testing apparatus according to Claim 9 or 10, wherein the energy recovery unit comprises at least one spring unit (31), in particular an air spring unit, and/or wherein the energy recovery unit comprises at least one linearly operating force element.

12. Testing apparatus according to one of the preceding claims, wherein a movable wall element (7) of the pressure loading unit (20) is in connection with at least one linearly operating force element, in particular a spring element (31), in such a way that the direction of the force of the force element changes with respect to a direction of movement of the movable wall element over the displacement range of the movable wall element.

13. Testing apparatus according to one of the preceding claims, wherein the movable wall element (7) of the pressure loading unit (20) is in connection with the testing chamber structure by way of at least two force elements, in particular in the form of spring elements (31), in such a way that the components of the forces that are generated by the force elements and act transversely to the direction of movement of the movable wall element (7) cancel one another out and the components that act in the direction of movement are cumulative.

14. Testing apparatus according to one of the preceding claims, wherein the measuring head (10) is an interferometric measuring head, in particular a shearography measuring head, and/or wherein the pressure loading unit generates a negative pressure in the testing chamber (6).

15. Method for testing a measurement object by a testing apparatus (6) according to one of the preceding claims, with the steps of:
- introducing the measurement object (5) into the testing chamber (6) of the testing apparatus, and
- measuring the measurement object (5) arranged in the testing chamber (6) at different pressure values,
**characterized**
**in that** the changing of the pressure in the testing chamber (6) is performed by changing the volume of the testing chamber while excluding air from the surroundings.

## Revendications

1. Appareil de contrôle, celui-ci consistant en un appareil de contrôle de pneus, avec une chambre de contrôle (6), une unité de charge de pression (20) pour modifier la pression dans la chambre de contrôle et au moins une tête de mesure (10) pour mesurer un objet de mesure agencé dans la chambre de contrôle (6) à différentes valeurs de pression générées par l'unité de charge de pression (20),
**caractérisé en ce que**
l'unité de charge de pression (20) modifie le volume de la chambre de contrôle en l'absence d'air par rapport à l'environnement pour modifier la pression dans la chambre de contrôle (6), l'unité de charge de pression (20) comprenant un élément de paroi (7) de la chambre de contrôle (6) qui est mobile par rapport au reste de la structure de la chambre de contrôle, dont le déplacement permet de modifier le volume de la chambre de contrôle.

2. Appareil de contrôle selon la revendication 1, dans lequel la modification du volume et/ou de la pression peut être commandée de préférence par l'intermédiaire de la position de l'élément de paroi mobile (7).

3. Appareil de contrôle selon la revendication 2, dans lequel l'élément de paroi mobile (7) est en liaison de manière étanche avec le reste de la structure de chambre de contrôle par l'intermédiaire d'un élément d'étanchéité flexible (8), notamment d'un soufflet, et/ou dans lequel l'élément de paroi mobile (7) est formé par une membrane flexible qui est en liaison de manière étanche avec le reste de la structure de chambre de contrôle.

4. Appareil de contrôle selon la revendication 2 ou 3, dans lequel l'élément de paroi mobile (7) présente, en projection dans un plan s'étendant perpendiculairement à sa direction de déplacement, une surface d'au moins 5 % du carré de la racine cubique du volume de la chambre de contrôle (6), de préférence d'au moins 10 %, de préférence encore d'au moins 30 %, et/ou dans lequel l'élément de paroi mobile (7) présente, en projection dans un plan s'étendant perpendiculairement à sa direction de déplacement, une surface d'au moins 0,05 m², de préférence d'au moins 0,2 m², de préférence encore d'au moins 0,5 m².

5. Appareil de contrôle selon l'une quelconque des revendications précédentes, dans lequel l'unité de charge de pression (20) peut modifier le volume de la chambre de contrôle (6) d'au moins 0,5 %, notamment d'au moins 1 %, et/ou dans lequel l'unité de charge de pression (20) peut modifier la pression dans la chambre de contrôle (6) d'au moins 5 mbar par la modification du volume de la chambre de contrôle (6), la modification du volume et/ou de la pression pouvant être commandée de préférence par l'intermédiaire de la position de l'élément mobile (7).

6. Appareil de contrôle selon l'une quelconque des revendications précédentes, avec un entraînement (9) par l'intermédiaire duquel l'élément de paroi mobile (7) peut être déplacé, dans lequel l'appareil de contrôle présente de préférence une commande qui commande l'entraînement et l'au moins une tête de mesure (10) de telle sorte que l'objet de mesure (5) est contrôlé par l'au moins une tête de mesure (10) au cours d'au moins un cycle de mesure dans lequel la pression dans la chambre de pression (6) est modifiée par un déplacement de l'élément de paroi mobile (7).

7. Appareil de contrôle selon la revendication 6, dans lequel l'entraînement (9) consiste en un entraînement linéaire.

8. Appareil de contrôle selon l'une quelconque des revendications précédentes, dans lequel l'élément de paroi mobile (7) est agencé dans la zone du plafond de la chambre de contrôle (6) et/ou dans lequel des éléments de paroi mobiles (7) sont prévus sur les côtés opposés de la chambre de contrôle (6).

9. Appareil de contrôle selon l'une quelconque des revendications précédentes, avec une unité de récupération d'énergie pour la récupération d'énergie à partir de l'énergie libérée par une décharge de pression de la chambre de contrôle (6), dans lequel l'énergie stockée dans l'unité de récupération d'énergie est de préférence utilisée pour une nouvelle charge de pression de la chambre de contrôle (6).

10. Appareil de contrôle selon la revendication 9, dans lequel l'unité de récupération d'énergie comprend un compensateur de force qui génère une force antagoniste à la force de pression exercée sur l'unité de charge de pression et notamment sur l'élément mobile dans l'état chargé.

11. Appareil de contrôle selon la revendication 9 ou 10, dans lequel l'unité de récupération d'énergie comprend au moins une unité de ressort (31), notamment une unité de ressort pneumatique et/ou dans lequel l'unité de récupération d'énergie comprend au moins un élément de force fonctionnant de manière linéaire.

12. Appareil de contrôle selon l'une quelconque des revendications précédentes, dans lequel un élément de paroi mobile (7) de l'unité de charge de pression (20) est en liaison avec au moins un élément de force fonctionnant de manière linéaire, notamment un élément de ressort (31), de telle sorte que la direction de la force de l'élément de force varie par rapport à une direction de déplacement de l'élément de paroi mobile sur la plage de course de l'élément de paroi mobile.

13. Appareil de contrôle selon l'une quelconque des revendications précédentes, dans lequel l'élément de paroi mobile (7) de l'unité de charge de pression (20) est en liaison avec la structure de la chambre de contrôle par l'intermédiaire d'au moins deux éléments de force, notamment sous la forme d'éléments de ressort (31), de telle sorte que les parties des forces produites par les éléments de force qui agissent transversalement à la direction de déplacement de l'élément de paroi mobile (7) s'annulent mutuellement et que les parties qui agissent dans la direction de déplacement s'additionnent.

14. Appareil de contrôle selon l'une quelconque des revendications précédentes, dans lequel la tête de mesure (10) consiste en une tête de mesure interférométrique, notamment une tête de mesure shearographique, et/ou dans lequel l'unité de charge de pression génère une dépression dans la chambre de contrôle (6).

15. Procédé de contrôle d'un objet de mesure avec un appareil de contrôle (6) selon l'une quelconque des revendications précédentes, avec les étapes suivantes :
- l'introduction de l'objet de mesure (5) dans la chambre de contrôle (6) de l'appareil de contrôle, et
- la mesure de l'objet de mesure (5) agencé dans la chambre de contrôle (6) à différentes valeurs de pression,
**caractérisé en ce que**
la modification de la pression dans la chambre de contrôle (6) s'effectue par modification du volume de la chambre de contrôle en l'absence d'air par rapport à l'environnement.
